Europäisches Patentamt

European Patent Office

Office européen des brevets

(19)

(11) Publication number: **0 338 855**
**A2**

## EUROPEAN PATENT APPLICATION

(12)

(21) Application number: **89304002.2**

(22) Date of filing: **21.04.89**

(51) Int. Cl.⁴: **G 02 B 6/44**

(30) Priority: **22.04.88 GB 8809595**

(43) Date of publication of application:
**25.10.89 Bulletin 89/43**

(84) Designated Contracting States:
**AT BE CH DE ES FR GB GR IT LI LU NL SE**

(71) Applicant: **BICC Public Limited Company**
**Devonshire House Mayfair Place**
**London W1X 5FH (GB)**

**CORNING LIMITED**
**Wear Glass Works**
**Sunderland SR4 6EJ (GB)**

(72) Inventor: **Darlington, John Robert**
**16 Wayford Close Frodsham**
**Warrington Cheshire, WA6 7QB (GB)**

(74) Representative: **Boon, Graham Anthony et al**
**Elkington and Fife Beacon House 113 Kingsway**
**London, WC2B 6PP (GB)**

(54) Method and apparatus for making an optical fibre member.

(57) A method is described of making an optical fibre member, in which foamed or foamable material (5) is introduced into an annular region surrounding a travelling optical fibre (1) to form a foamed sheath which surrounds the optical fibre and is spaced therefrom. The sheath (6) travels in the same direction of travel as the optical fibre (1) but, over an initial portion of its travel, at a speed less than the speed of travel of the optical fibre. A drawing force is applied to tha sheath so that the sheath and the optical fibre subsequently travel at the same speed and the internal diameter of the sheath is thereby caused to approach the external diameter of the optical fibre.

EP 0 338 855 A2

**Description**

## Method and apparatus for making an optical fibre member

This invention relates to a method and apparatus for making an optical fibre member.

A method is known from EP-A-108590 for installing an optical fibre member in a tubular passageway using a flow of air which travels along the tubular passageway in the desired direction of travel of the optical fibre member. For this purpose the optical fibre member comprises a sheath surrounding one or more optical fibres, the sheath being of low density so as to facilitate its being carried by the flow of air. The sheath may conveniently be of a foamed material, preferably a foamed plastics material, and this invention relates to the manufacture of optical fibre members which have foamed sheaths.

In EP-A-157610 there is a proposal to apply a foam sheath by extrusion. However, although an extrusion method is capable of producing an optical fibre member which can be blown it has at least one significant disadvantage. This is that the act of extrusion causes the sheath material to exert substantial forces on the optical fibre or fibres contained within the sheath. This in turn causes a deterioration in the optical properties of the fibre or fibres, and in particular an increase in attenuation. It is an object of the present invention to provide a method and apparatus for making an optical fibre member in which a sheath is applied by a process which eliminates, or at least reduces, the problem just referred to.

According to the present invention there is provided a method of making an optical fibre member which comprises introducing foamed or foamable material into an annular region surrounding a travelling optical fibre to form a foamed sheath which surrounds the optical fibre and is spaced therefrom, the sheath travelling in the direction of travel of the optical fibre but, over an initial portion of its travel, at a speed less than the speed of travel of the optical fibre, and applying a drawing force to the sheath at a region located after said initial portion so that the sheath and the optical fibre travel at the same speed and the internal diameter of the sheath is caused to approach the external diameter of the optical fibre.

The invention further provides an apparatus for making an optical fibre member, which comprises means for introducing a foamed or foamable material into an annular region surrounding a travelling optical fibre to form a foamed sheath which surrounds the optical fibre and is spaced therefrom, the sheath initially travelling in the direction of travel of the optical fibre but, over an initial portion of its travel, at a speed less than the speed of travel of the optical fibre, and means for applying a drawing force to the sheath at a region located after said initial portion so that the sheath and the optical fibre travel at the same speed and the internal diameter of the sheath is caused to approach the external diameter of the optical fibre.

Initial contact between the optical fibre and the extrudate is at lower temperature and pressure than happens with "pressure" extrusion. This helps to reduce the forces applied to the fibre both initially and during cooling of the extrudate.

It is to be understood that the method and apparatus of the present invention can be used to form a foamed sheath either around a single optical fibre or around a plurality of optical fibres in a group.

A brief description will now be given of the characteristics of an optical fibre member produced by the method and apparatus of the present invention. For convenience, what will be described is an optical fibre member in which a single optical fibre is surrounded by the foamed sheath, but it is to be understood that what is said is applicable, with appropriate modifications, to an optical fibre member in which a plurality of optical fibres are so surrounded. In the optical fibre member the sheath surrounds the optical fibre but is not bonded thereto. Typically, the sheath is in gentle contact with the optical fibre but exerts no appreciable force thereon. This is shown by the fact that if a short piece of optical fibre member, say a length of 0.1m is taken it is usually readily possible by hand to pull the optical fibre member out of the sheath, without any significant traces of the sheath remaining on the external surface of the optical fibre.

This is of benefit not only when preparing the fibre ends for jointing or for connectors, but also in that it improves flexibility.

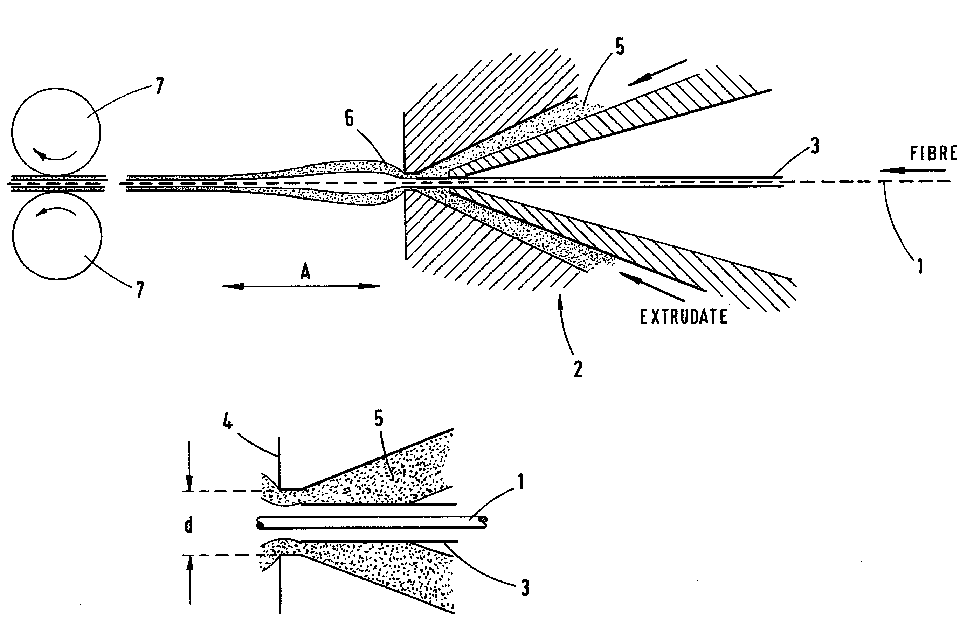

An apparatus according to the present invention is shown in the accompanying drawing, which is a diagrammatic view, not to scale.

The drawing shows an optical fibre 1 travelling from right to left at a speed which could be from, for example, 15 to 100 m/min, and typically about 40 m/min. Typically the fibre comprises a silica inner region having a diameter of 125 microns and an acrylate coating to bring the overall diameter up to 250 microns.

The fibre 1 enters a die 2 having a narrow bore tube 3 passing down the centre thereof. The tube 3 terminates at its downstream end at a point just before the outlet face 4 of the die. This can be seen most clearly in the enlarged detailed view of this portion of the apparatus which is included in the drawing

Foamable plastics material is introduced into the die and passes through a conically tapering passageway 5. The molten material emerges from the die through an annular space defined between the tube 3 and the adjacent surrounding wall of the die outlet. As the foamable material exits from the die it experiences a drop in the pressure exerted on it, and proceeds to foam. This causes the exiting material to assume the form of a tube 6 of foamed plastics material which, as seen in the drawing, initially expands.

Downstream of the die the optical fibre member which is produced, and which consists of the fibre 1 sheathed by the tube 6, is gripped by tractor rollers 7 the circumferential speed of which is substantially equal to the speed at which the fibre 1 enters the die. The tube 6, on leaving the die, initially travels at a speed somewhat less than that at which the fibre 1 is travelling and at which the rollers 7 are rotating. Because of this the force exerted by the rollers 7 causes the tube 6 to be drawn down over a region indicated as A which, typically, may be of the order of 20 mm in length. During draw-down both the internal and external diameters of the tube 6 decrease, and the tube 6 comes into gentle contact with the exterior of the fibre 1, without, however, exerting any appreciable force thereon. By the time contact is made the foamable plastics material of the tube 6 has already solidified to an extent such that no significant bonding takes place between the tube 6 and the fibre 1.

Downstream of the tractor rollers 7 the optical fibre member undergoes further treatment, for example to cool it and apply identifying markings, but these further steps form no part of the present invention.

An optical fibre member produced by the method and apparatus of the present invention may, for example, have an external diameter in the range of from 0.30 to 1.00 mm, when cool, and a typical diameter which has been found to be successful in practice is 0.57 mm. For this purpose the exit diameter of the die, indicated as $\underline{d}$ in the drawing, should be about 0.75 mm.

One material which is particularly suitable for providing the foamed tube 6 is foamed ethylene vinyl acetate copolymer, and in this connection attention is drawn to our copending application entitled "Optical fibre member" filed on even date herewith and claiming priority from UK Patent Application No. 8809596.3.

## Claims

1. A method of making an optical fibre member which comprises introducing foamed or foamable material into an annular region surrounding a travelling optical fibre to form a foamed sheath which surrounds the optical fibre and is spaced therefrom, the sheath travelling in the direction of travel of the optical fibre but, over an initial portion of its travel, at a speed less than the speed of travel of the optical fibre, and applying a drawing force to the sheath at a region located after said initial portion so that the sheath and the optical fibre travel at the same speed and the internal diameter of the sheath is caused to approach the external diameter of the optical fibre.

2. A method according to claim 1, wherein the said material is a foamable material which is fed to the said annular region under pressure and which then experiences a drop in pressure to cause foams to occur.

3. A method according to claim 1 or 2, wherein the said material comprises an ethylene vinyl acetate copolymer containing a foaming agent.

4. An apparatus for making an optical fibre member, which comprises means for introducing a foamed or foamable material into an annular region surrounding a travelling optical fibre to form a foamed sheath which surrounds the optical fibre and is spaced therefrom, the sheath initially travelling in the direction of travel of the optical fibre but, over an initial portion of its travel, at a speed less than the speed of travel of the optical fibre, and means for applying a drawing force to the sheath at a region located after said initial portion so that the sheath and the optical fibre travel at the same speed and the internal diameter of the sheath is caused to approach the external diameter of the optical fibre.

5. An apparatus according to claim 4, comprising a die defining a fibre passageway through which the optical fibre travels and a material passageway which communicates with the said annular region and through which the said material passes to the said annular region.

6. An apparatus according to claim 5, wherein the material passageway is a conically tapering passageway which surrounds the fibre passageway.

7. An apparatus according to claim 5 or 6, wherein the said annular region is immediately upstream of the outlet face of the die.

8. An apparatus according to any one of claims 4 to 7, wherein the said means for applying a drawing force comprises tractor rollers which are adapted to grip the sheathed fibre and which are adapted to rotate at substantially the same speed as the speed of travel of the optical fibre.

FIBRE

5

6

3

1

2

A

EXTRUDATE

7

7

4

5

1

3

d

EP 0 338 855 A2